# EUROPEAN PATENT APPLICATION

(11) **EP 1 514 886 A1**
(43) Date of publication of application: **16.03.2005**
(21) Application number: 04020592.4
(22) Date of filing: 31.08.2004
(51) Int. Cl.: C08G 18/70, C08G 18/08, E02B 5/02

(54) **Geotextile/Polymer composite liners based on waterborne resins**

(30) Priority: 12.09.2003 US 661647
(71) Applicant: Bayer MaterialScience LLC, Pittsburgh PA 15205 (US)
(72) Inventor: Markusch, Peter H., Sanibel, FL 33957 (US); Güther, Ralf, 51469 Bergisch Gladbach (DE); Sekelik, Thomas L., Carnegie, PA 15106 (US)
(74) Representative: Perchenek, Nils, Dr.

(57) **Abstract**

The present invention relates to a geotextile/polymer composite prepared from one or more geotextiles and an aqueous polymer dispersion and also to a process for preparing such composites. The inventive composites may find use as liners for canals and ditches for irrigation and wastewater, roof membranes, secondary containment, etc.

## Description

### TECHNICAL FIELD OF THE INVENTION

The present invention relates to a geotextile/polymer composite liner prepared by treating geotextiles with aqueous polymer dispersions and subsequent evaporation of the water. Geotextile/polymer composites of the present invention can be used as liners for canals and ditches for irrigation and wastewater, roof membranes, secondary containment, etc.

### BACKGROUND OF THE INVENTION

In recent years, the management of natural resources has become important in many countries throughout the world. Efforts have been directed both toward the conservation of our resources and toward the elimination of pollution from our environment. Particular emphasis has been placed on waste leakage and water loss.

Losses in the distribution of water using unlined irrigation ditches are estimated at a minimum to be 25 % and in some situations to be more than 50 % depending upon the porosity of the ditch surface and the distance the water is being moved. In most rural areas, ditches are typically formed by excavating the soil to the desired depth and width. The water moves through the ditch in contact with the exposed natural surface. This can be sand, clay, rocks, etc. and, more commonly, mixtures thereof. The porosity will depend upon the proportions of the different components.

The loss of water in unlined irrigation ditches at one time was considered acceptable only because the supply of water exceeded demand. However, as civilization developed and world population increased, more water was required for both greater food production and for the marked increase in non-agriculture uses. In addition to greater domestic uses in sanitation, industry now employs large quantities of water in manufacturing and processing procedures.

This high level of consumption plus the very high cost of developing new water supplies has shifted attention to water conservation. Domestic appliances that use less water have been developed. Also, industry has installed recycling purification systems to reduce water consumption.

Although conservation efforts have reduced water consumption to a degree, water still is in relatively short supply, particularly in recent years with the severe droughts in the United States and other countries. Since the most cost effective conservation opportunities and readily accessible water supplies already have been developed, greater attention must be directed to improving the efficiency of water distribution systems.

Improvements in water distribution have been made. A limited number of ditches and canals have been lined with concrete and/or preformed concrete pipes. Concrete is durable and has a long life when properly used. However, concrete is expensive to place and finish and is damaged by unfavorable temperatures during curing. Also, concrete is subject to frost damage, cracking and heaving which results in leaks.

Processes for forming polyurethane composite liners for canals and ditches and apparatuses to perform such a processes are disclosed, for example, in U.S. Pat. Nos. 4,872,784; 4,955,759; 4,955,760; 5,049,006; 5,062,740; 5,421,677; and 5,607,998.

U.S. Pat. No. 5,421,677 ("the '677 patent") is directed to an improved process of forming a ditch liner. The mixture of the '677 patent is a two component polyurethane resin and one or more fillers in an amount of up to 60% by weight based upon the total weight of the mixture. The mixture is dispensed on a geotextile, thereby forming a liquid filler containing polyurethane soaked geotextile composite. The liquid polyurethane soaked geotextile composite is then placed over the surface of an area to be lined.

One drawback of the resins used in the patents listed above is the use of reactive resins having at least two components which have to be metered and mixed at the job site using special equipment. Another problem encountered in using reactive resins like polyesters, epoxy resins or polyurethanes is that after mixing the resins have only a limited potlife before they solidify. This allows for only a short time between application on a geotextile and installation. In some resins, i.e. polyurethanes water has to be carefully excluded to avoid foaming upon reaction with the isocyanate component. For the same reason it is also impossible to apply reactive polyurethane composites on wet surfaces or whenever rain is immanent

For the foregoing reasons, it would be desirable to produce geofabric/polymer composites using a binder composition that does not have these shortcomings.

### SUMMARY OF THE INVENTION

Accordingly, the present invention provides a geotextile/polymer composite prepared from one or more geotextiles and an aqueous polymer dispersion and also to a process for preparing such composites. The inventive geotextile/polymer composites may find use as liners for canals and ditches for irrigation and wastewater, roof membranes, secondary containment, etc.

These and other advantages and benefits of the present invention will be apparent from the Detailed Description of the Invention herein below.

### DETAILED DESCRIPTION OF THE INVENTION

The present invention will now be described for purposes of illustration and not limitation. Except in the operating examples, or where otherwise indicated, all numbers expressing quantities, percentages and so forth in the specification are to be understood as being modified in all instances by the term "about."

The present invention provides a geotextile/polymer composite made of one or more geotextiles substantially soaked with an aqueous polymer composition made from an aqueously dispersed organic polymer having a solid content of about 10 to 70 % by weight, and optionally viscosity adjusting additives, coalescing solvents, surfactants, crosslinking agents, pigments, fillers, and other additives.

The present invention also provides a process of forming a geotextile/polymer composite involving the steps of soaking substantially one or more geotextiles with an aqueous polymer composition made of an aqueously dispersed organic polymer having a solid content of about 10 to 70 % by weight, and optionally viscosity adjusting additives, coalescing solvents, surfactants, crosslinking agents, pigments, fillers, and other additives, conforming the wet, substantially aqueous polymer soaked one or more geotextiles to a surface and evaporating the water to form a geotextile reinforced polymer composite.

Because of environmental concerns, water has replaced organic solvents in many polymer applications for i.e. coatings, adhesives and binders. Aqueous dispersions of polymers like alkyds, acrylics, styrene-butadiene-rubber, polyvinyl chloride, polyvinyl acetate, natural rubber, silicones, polyethylene, polyesters, polyurethanes, etc. are commercially available from companies like Rhoem&Haas, Witco, BASF, Bayer, DuPont, Sherwin Williams, etc.

Aqueous dispersions of polymers are also often called latices. Different type of manufacturing processes, properties and applications are outlined i.e. in the "Encyclopedia of Polymer Science and Engineering", vol. 8, p. 647 pp, published by John Wiley & Sons, Inc. 1987, K.O. Calvert "Polymer Latices and their Applications" Applied Science Publishers, London, 1977, "Waterborne Polyurethanes" by J.W. Rosthauser and K.H. Nachtkamp, in Advances in Urethane Science and Technology, vol.10, p. 121 pp (1987).

Suitable aqueous polymers containing urethane and/or urea groups are disclosed for example in U.S. Pat. Nos. 4,408,008; 4,501,852; 4,701,480; 4,724,095; 4,826,894; 4,879,322; 4,925,885; 5,043,435; and 5,389,718.

Examples of aqueous polymers based on water dispersible polyisocyanate technology are disclosed in U.S. Pat. Nos. 5,191,012; 5,212,230; 5,221,710; 5,372,875; and 5,389,720.

Upon evaporation of the water, the polymer particles coalesce to form a polymer film that, depending on the chemistry, can provide very good water resistance. To further improve resistance to solvent and water, reactive groups causing crosslinking of the polymers may be incorporated which are activated upon or after film formation. Further crosslinking can be achieved by addition of reactive chemical crosslinking agents, i.e. aziridines, water dispersible isocyanates etc. If needed, so called "associative thickeners" as described e.g., in U.S. Pat. No. 4,079,028 can be added to adjust the viscosity and the rheological behavior of aqueous polymer dispersions.

Other additives used in aqueous dispersions of polymers include coalescing solvents, surfactants, pigments, fillers, etc. To achieve desired properties (i.e. hardness, flexibility, abrasion resistance, etc) aqueous dispersions of different polymers may preferably be blended prior to the application (i.e. polyurethanes and acrylics).

Suitable aqueous polymer dispersions preferably have solid contents of 10-70%, however, solid contents of 30-50% are more preferred. The solid contents of the aqueous polymer dispersions may be in an amount ranging between any combination of these values, inclusive of the recited values.

Aqueous polymer dispersions useful in the present invention form continuous polymer films at temperatures between 2°C and 50°C providing sufficient flexibility i.e. elongation of at least 5 %, strength properties, i.e. tensile strength of at least 200 psi and good abrasion resistance. Other desirable properties include low water absorption, i.e. less than 10 % preferably less than 5 %, and excellent hydrolytic stability according to ASTM D3137.

As used herein, the term "geotextile" refers to any woven or non-woven porous blanket or mat produced from natural or synthetic fibers. Geotextiles may be made from a variety of synthetic materials such as polypropylene, polyester, nylon, polyvinylchloride and polyethylene or from natural fibers such as jute or cotton. They may be woven using monofilament yarns or slit film, or non-woven needled, heat set, or resin bonded fabrics. Geotextiles are available commercially from numerous manufacturers in the United States. As those skilled in the art are aware, geotextiles are used primarily to line earthen surfaces. Such liners may have secondary uses in lining roofs, ponds, reservoirs, landfills, and underground storage tanks, canals or ditches. As used herein, the terms "ditch" and "canal" are interchangeable and can refer to any liquid-carrying surface.

Geotextiles should have a surface tension that makes them easily wettable with aqueous polymers. It is preferred that at least one of the geotextiles used in the present invention is thicker, with a "fluffier" texture that can absorb the one-component heterogeneous liquid polyurethane composition like a sponge. One or more geotextiles can be used in combination with the aqueous polymer. The ultimate thickness of the geotextile/polymer composite liner may be determined by the choice of geotextiles (number of layers and thickness of the individual layers) as well as the amount of the aqueous polymer composition applied.

It is preferred to adjust the viscosity of the aqueous polymer to the extent that it will not run off even on vertical surfaces after applied to the geotextile substrate.

In the simplest embodiment of the present invention, precut geotextile sheets may be dipped into a bath of the aqueous polymer dispersion and the soaked geotextile applied on the surface to be lined.

One or more geotextiles may also be pulled continuously through a bath of the aqueous polymer dispersion, cut to size and placed over the surface to be lined. If a consistent thickness of the composite is desired, the soaked geotextile may be passed through a die or rollers prior to being cut.

In a preferred embodiment of the present invention, the geotextile/polymer composite liner may be prepared using a machine such as that described in U.S. Pat. No. 5,639,331 ("the '331 patent"). The '331 patent teaches a mobile ditch lining apparatus comprising reservoirs for supplying raw materials such as resin, catalysts, colors or other additives.

In the simplest version of this embodiment, only one reservoir is necessary to accommodate the aqueous polymer dispersion. No mixing chamber is required and the aqueous polymer dispersion is directly metered into the vat. If, however, a crosslinker or any other of the before mentioned additives is metered and mixed continuously with the aqueous polymer dispersion more than one reservoir is desirable. The reservoirs are connected to a mixing chamber through flexible conduit means. The delivery rate of the components to the mixing chamber will vary depending upon the particular formulation and quantity thereof required for a specific incremental area of the liner being formed at that moment. The components are mixed in the mixing chamber.

From the mixing chamber, the aqueous polymer composition may be applied to one or more geotextiles. The geotextiles may be pulled from a vat containing the aqueous polymer composition through an adjustable die. The opening of the die provides even distribution of the aqueous polymer composition on the geotextiles, determines how much aqueous resin is dispensed on the geotextile, and also controls the thickness of the aqueous polymer soaked geotextile composite. The polyurethane soaked geotextile may then be cut to the desired length and placed on the area to be lined where it conforms to the surface and cures to form a geotextile/polymer composite liner. Installing the aqueous polymer soaked geotextile liners in such a way that they overlap to a certain extend assures that after curing a seamless permanent flexible composite liner is obtained.

In another embodiment of the present invention, the aqueous polymer composition may be spray applied to the geotextile with commercially available spray equipment. The aqueous polymer soaked geotextile may be placed on the area to be lined where it conforms to the surface and cures to form a geotextile/polymer composite. The geotextile may also first be cut to size and then placed on the area to be lined and the aqueous polymer composition may be sprayed onto it. Preferably, the geotextile with the still liquid aqueous polymer composition on it is rolled with a roller, such as a paint roller, to allow the aqueous polymer dispersion to penetrate through the geotextile to the surface of the area to be lined.

In another embodiment of the present invention, the aqueous polymer composition may be sprayed on a broken concrete surface of a concrete lined ditch and a geotextile placed over it so that the geotextile absorbs the still liquid aqueous polymer composition to form a soaked composite which will cure to form a solid yet flexible polyurethane/geotextile composite.

The above described composition preferably cures in a reasonable amount of time usually without application of any externally applied heat and under temperature conditions preferably varying over a range of from 2°C to 50°C.

The thickness of the geotextile/polymer composite can be varied over a wide range, but preferably measures from 40 microns to 500 microns.

The amount of polymer (based on solid) applied to the geotextile(s) can be varied, but usually the polymer applied per square meter ranges preferably from 0.2 kg to 20 kg, more preferably from 0.5 kg to 5 kg. The amount of polymer applied may be in an amount ranging between any combination of these values, inclusive of the recited values.

If desired, several layers of the aqueous polymer soaked geotextile(s) may be applied over each other to obtain a composite of higher strength and dimensional stability. This is the preferred mode for lining an earthen canal or ditch.

The present invention is further illustrated, but is not to be limited, by the following examples.

### EXAMPLES:

The following components were used in the working examples:

### Aqueous Polymer A:

BAYHYDROL 123, an anionic dispersion of an aliphatic polycarbonate urethane resin in water/n-methyl-2-pyrrolidone (available from Bayer Polymers, LLC).

| | |
|---|---|
| pH | 7.0 - 9.0 |
| Solids (wt.%) | 35 ± 2 |
| Viscosity @ 25°C (mPa.s) | 50 - 400 |

### Aqueous Polymer B:

BAYHYDROL 140 AQ, an anionic dispersion of an aliphatic polyester urethane resin in water/toluene available from Bayer Polymers, LLC.

| | |
|---|---|
| pH | 6.0 - 8.0 |
| Solids (wt.%) | 40 ± 2 |
| Viscosity @ 25°C (mPa.s) | 100 - 700 |

### Aqueous Polymer C:

Acrylic binder ACRYGEN D-471 available from OmNova.

### Geotextile A:

TYPAR-3301, spunbonded polypropylene, 3 oz/yd², 12 mils thickness (Reemay).

### Geotextile B:

TREVIRA Spunbound Type 1620, polyester, nonwoven, heatbonded, 5.7 oz/yd², 37 mils thickness, (Fluid Systems).

### Example 1

A piece of Geotextile A (one square foot, 9.9 g) was placed on a polyethylene sheet. Aqueous Polymer A (100 g) was poured on it and evenly distributed using a small plastic paint roller. Subsequently, a piece of Geotextile B (one square foot, 24.2 g) was placed on top of the coated Geotextile A sheet (burnished side up) and rolled. An additional 100 g of Aqueous Polymer A were poured on top of Geotextile B and again evenly distributed by rolling. The sample was cut into two ½ square foot samples; one (denoted as Example 1a) was postcured at room temperature (20°C) for 7 days and the other was postcured at 80°C for 24 hours (denoted as Example 1b). The composites were tested for physical properties, which are summarized below in Table I.

### Example 2

A piece of Geotextile A (one square foot, 9.9 g) was placed on a polyethylene sheet. Aqueous Polymer B (100 g) was poured on it and evenly distributed using a small plastic paint roller. Subsequently, a piece of Geotextile B (one square foot, 24.2 g) was placed on top of the coated Geotextile A sheet (burnished side up) and rolled. An additional 100 g of Aqueous Polymer C were poured on top of Geotextile B and again evenly distributed by rolling. The sample was cut into two ½ square foot samples, one (denoted as Example 2a) was postcured at room temperature (20°C) for 7 days, the other one (denoted as Example 2b) was postcured at 80°C for 24 hours. The composites were tested for physical properties, which are summarized below in Table I.

### Example 3

A piece of Geotextile A (one square foot, 9.9 g) was placed on a polyethylene sheet. Aqueous Polymer C (100 g) was poured on it and evenly distributed using a small plastic paint roller. Subsequently, a piece of Geotextile B (one square foot, 24.2 g) was placed on top of the coated Geotextile A sheet (burnished side up) and rolled. An additional 100g of Aqueous Polymer C were poured on top of Geotextile B and again evenly distributed by rolling. The composite (Example 3) was postcured at room temperature (70°C) for seven days and subsequently tested for physical properties. The composite was tested for physical properties, which are summarized below in Table I.

In Table I below, tensile strength was determined according to ASTM D3489-96; elongation was determined according to ASTM D3489-96; die "C" tear strength was determined according to ASTM D624-98 and peel strength was the average determined according to ASTM D5308G92.

**Table I**

| **Ex.** | **Tensile Strength (psi)** | **Elongation (%)** | **Die"C" Tear Strength (Ibf/in)** | **Peel Strength (Ibs/in)** |
|---|---|---|---|---|
| **1a** | **4241** | **62** | **678** | **3.72** |
| 1 b | 3097 | 63 | 595 | 6.32 |
| 2a | 4733 | 63 | 837 | 4.03 |
| 2b | 3457 | 62 | 721 | 4.35 |
| 3 | 2471 | 66 | 862 | not determined |

As can be appreciated by reference to Table I, those composites of the present invention postcured at room temperature (Ex. 1a and 2a) showed superior properties even when compared to those postcured at elevated temperature (Ex. 1 b and 2b). This result is very favorable for outdoor applications, (e.g., for lining a canal) where cure at elevated temperatures, i.e. 80°C, is not feasible.

Although the invention has been described in detail in the foregoing for the purpose of illustration, it is to be understood that such detail is solely for that purpose and that variations can be made therein by those skilled in the art without departing from the spirit and scope of the invention. The scope of the invention is to be measured by the appended claims.

## Claims

1. A geotextile/polymer composite comprising:
one or more geotextiles substantially soaked with an aqueous polymer composition comprising,
an aqueously dispersed organic polymer having a solid content of about 10 to about 70 % by weight, and
optionally viscosity adjusting additives, coalescing solvents, surfactants, crosslinking agents, pigments, fillers, and other additives.

2. A liner for irrigation canals and ditches comprising the composite according to Claim 1.

3. The composite according to Claim 1, wherein the aqueous polymer composition has a solid content of about 30 to about 50 % by weight.

4. The composite according to Claim 1, wherein the aqueous polymer composition forms continuous polymer films at temperatures between about 2°C and about 50°C upon evaporation of water.

5. The composite according to Claim 1, wherein the aqueous polymer composition forms continuous polymer films with an elongation of at least about 5 % and a tensile strength of at least about 200 psi.

6. The composite according to Claim 1, wherein the water absorption of the polymer is less than about 10 % by weight.

7. The composite according to Claim 1, wherein the water absorption of the polymer is less than about 5 % by weight.

8. The composite according to Claim 1, wherein the one or more geotextiles includes at least one thicker, more sponge-like geotextile.

9. The composite according to Claim 1, wherein the one or more geotextiles are soaked with sufficient aqueous polymer composition such that the amount of polymer present in the composite ranges from about 1 kg to about 20 kg of polymer per square meter of geotextile.

10. The composite according to Claim 1 in which one or more geotextiles are soaked with sufficient aqueous polymer composition that the amount of polymer present in the composite ranges from 2 kg to 5 kg of polymer per square meter of geotextile.

11. The composite according to Claim 1 having a thickness of from about 40 microns to about 500 microns.

12. A process of forming a geotextile/polymer composite comprising the steps of:
soaking substantially one or more geotextiles with an aqueous polymer composition comprising,
an aqueously dispersed organic polymer having a solid content of about 10 to about 70 % by weight, and
optionally viscosity adjusting additives, coalescing solvents, surfactants, crosslinking agents, pigments, fillers, and other additives;
conforming the substantially aqueous polymer soaked one or more geotextiles to a surface; and
evaporating water to form a geotextile reinforced polymer composite.

13. A liner for irrigation canals and ditches made by the process according to Claim 12.

14. The process according to Claim 12, wherein the aqueous polymer composition has a solid content of about 30 to about 50% by weight.

15. The process according to Claim 12, wherein the aqueous polymer composition forms continuous polymer films at temperatures between about 2°C and about 50°C upon evaporation of the water.

16. The process according to Claim 12, wherein the aqueous polymer composition forms continuous polymer films with an elongation of at least about 5 % and a tensile strength of at least about 200 psi.

17. The process according to Claim 12, wherein the one or more geotextiles includes at least one thicker, more sponge-like geotextile.

18. The process according to Claim 12, wherein the one or more geotextiles are soaked with sufficient aqueous polymer composition such that the amount of polymer present in the composite ranges from about 0.2 kg to about 20 kg of polymer per square meter of geotextile.

19. The process according to Claim 12, wherein the one or more geotextiles are soaked with sufficient aqueous polymer composition such that the amount of polymer present in the composite ranges from about 0.5 kg to about 5 kg of polymer per square meter of geotextile.

20. In a process of lining canals and ditches, the improvement comprising including the composite according to Claim 1.

21. In a process of lining canals and ditches, the improvement comprising including the composite made by the process according to Claim 12.
